# EUROPEAN PATENT APPLICATION

(11) **EP 2 400 770 A2**
(43) Date of publication of application: **28.12.2011**
(21) Application number: 10191641.9
(22) Date of filing: 18.11.2010
(51) Int. Cl.: H04N 13/04

(54) **Pointing Device, Controlling Method of the Same, Glasses for 3D Image, and Display Apparatus**

(30) Priority: 25.06.2010 KR 20100060346
(71) Applicant: Samsung Electronics Co., Ltd., Suwon-si, Gyeonggi-do 442-742 (KR)
(72) Inventor: Chung, Ji-min, Gyeonggi-do (KR)
(74) Representative: Robinson, Ian Michael

(57) **Abstract**

A pointing device includes: a communication unit which performs communication with glasses for viewing a 3D image and a display apparatus; and a control unit which controls the communication unit to perform communication with the glasses, detects a reference distance between the glasses and the pointing device and a measurement distance between the glasses and the pointing device, and determines depth information for 3D pointing based on the reference distance and the measurement distance.

## Description

### BACKGROUND

### Field

Apparatuses and methods consistent with the exemplary embodiments relate to a pointing device, a controlling method of the same, glasses for three-dimensional (3D) image, and a display apparatus, and more particularly, to a pointing device which is capable of easily setting depth information required to perform 3D pointing for a 3D image having a depth, a controlling method of the same, glasses for 3D image, and a display apparatus.

### Description of the Related Art

Technologies for performing a pointing operation using a gyro sensor while vertically and horizontally moving a pointer on a two-dimensional (2D) screen have been currently commercialized. However, a 3D pointing operation could not be performed for a 3D image only by using an existing gyro sensor since the 3D image had a depth.

The 3D pointing on a 3D screen requires depth information. In this case, although the depth information may be obtained using a complicated method employing posture and eye gaze information obtained from, for example, a 3D camera, etc., it is not easy to obtain depth information in this manner.

### SUMMARY

According to the present invention there is provided an apparatus and method as set forth in the appended claims. Other features of the invention will be apparent from the dependent claims, and the description which follows.

One or more exemplary embodiments provide a device and method which is capable of easily setting depth information required to perform a 3D pointing operation for a 3D image having a depth.

According to an aspect of an exemplary embodiment, there is provided a pointing device including: a communication unit which performs communication with glasses for viewing a 3D image and a display apparatus; and a control unit which controls the communication unit to perform communication with the glasses, detects a reference distance between the glasses and the pointing device, detects a measurement distance between the glasses and the pointing device, and determines depth information for 3D pointing based on the reference distance and the measurement distance.

The reference distance may correspond to a maximum distance between the glasses and the pointing device.

The pointing device may further include a user input unit which receives an input from a user, and the control unit may detect the reference distance in response to the input from the user.

The depth information for the 3D pointing may be determined based on a ratio of the measurement distance to the reference distance.

The communication unit may include a transmission element which transmits an ultrasonic wave, and the control unit may detect the reference distance and the measurement distance based on an amount of time for the ultrasonic wave transmitted from the transmission element to reach the glasses and on an ultrasonic wave speed.

The communication unit may include a transceiving element which transceives an ultrasonic wave, and the control unit may detect the reference distance and the measurement distance based on an amount of time for the ultrasonic wave transmitted from the transceiving element to reach the glasses and return to the pointing device and on an ultrasonic wave speed.

The pointing device may further include a motion detection unit which detects motion of the pointing device, and the control unit may calculate coordinates for the 3D pointing based on information detected by the motion detection unit and the depth information for the 3D pointing.

The control unit may control the communication unit to transmit information on the coordinates for the 3D pointing to the display apparatus.

According to another aspect of another exemplary embodiment, there is provided a method of controlling a pointing device, the method including: performing communication with glasses for viewing a 3D image to detect a reference distance between the glasses and the pointing device; performing communication with the glasses to detect a measurement distance between the glasses and the pointing device; and determining depth information for 3D pointing based on the reference distance and the measurement distance.

The reference distance may correspond to a maximum distance between the glasses and the pointing device.

The method may further include receiving an input from a user, and the reference distance may be detected in response to the input from the user.

The depth information for the 3D pointing may be determined based on a ratio of the measurement distance to the reference distance.

In the method, the pointing device may include a transmission element which transmits an ultrasonic wave, and the reference distance and the measurement distance may be detected based on an amount of time for the ultrasonic wave transmitted from the transmission element to reach the glasses and on an ultrasonic wave speed.

The pointing device may include a transceiving element which transceives an ultrasonic wave, and the reference distance and the measurement distance may be detected based on an amount of time for the ultrasonic wave transmitted from the transceiving element to reach the glasses and return to the pointing device and on an ultrasonic wave speed.

The pointing device may further include a motion detection unit which detects motion of the pointing device, and coordinates for the 3D pointing may be calculated based on the information detected by the motion detection unit and the depth information for the 3D pointing.

The information on the coordinates for the 3D pointing may be transmitted to a display apparatus.

According to an aspect of another exemplary embodiment, there is provided glasses for viewing a 3D image, the glasses including: a communication unit which performs communication with a pointing device and a display apparatus; and a control unit which controls the communication unit to perform communication with the pointing device, detects a reference distance between the glasses and the pointing device, detects a measurement distance between the glasses and the pointing device, and determines depth information for 3D pointing based on the reference distance and the measurement distance.

According to an aspect of another exemplary embodiment, there is provided a display apparatus including: a communication unit which performs communication with a pointing device and glasses; and a control unit which controls the communication unit to receive a reference distance between the glasses and the pointing device, to receive a measurement distance between the glasses and the pointing device from at least one of the pointing device and the glasses, and determines depth information for 3D pointing based on the received reference distance and measurement distance.

As described above, according to exemplary embodiments, it is possible to obtain depth information required to perform a 3D pointing operation for a 3D image having a depth, thereby allowing the 3D pointing operation to be performed conveniently and efficiently based on the depth information.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a block diagram showing a configuration of a pointing device according to an exemplary embodiment;
FIGS. 2A to 2D are views showing a detected measurement distance according to an exemplary embodiment;
FIGS. 3A and 3B are perspective views of a pointing device according to an exemplary embodiment;
FIG. 4 is a view showing control operation between a pointing device, glasses for 3D image and a display apparatus according to an exemplary embodiment;
FIG. 5 is a view showing a control procedure of a pointing device according to an exemplary embodiment;
FIG. 6 is a block diagram showing a configuration of glasses for 3D image according to an exemplary embodiment; and
FIG. 7 is a block diagram showing a configuration of a display apparatus according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

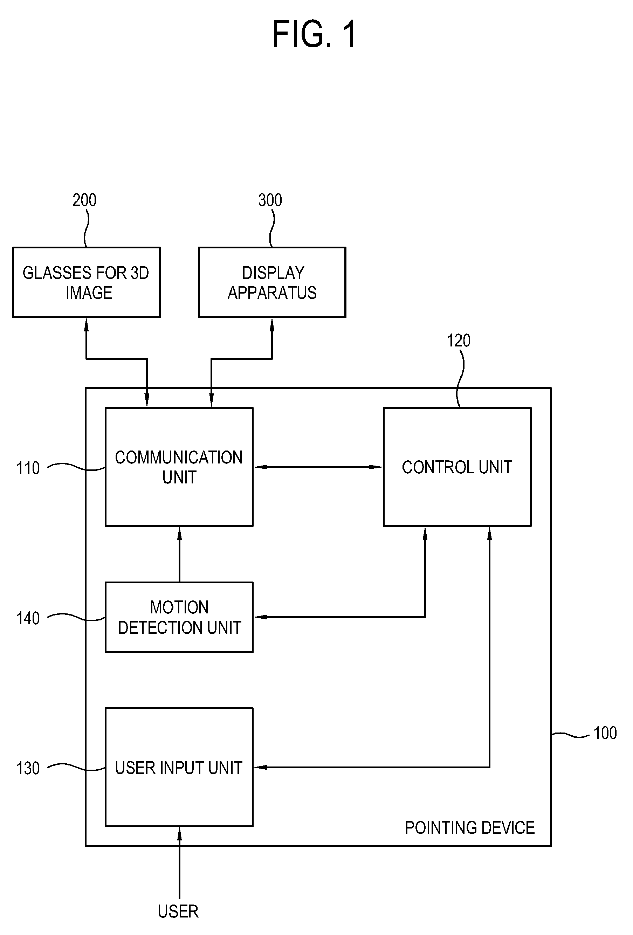

FIG. 1 is a block diagram showing a configuration of a pointing device according to an exemplary embodiment.

A pointing device 100 according to an exemplary embodiment may include, for example, a remote controller, a laser pointer, a light pen or others known in the art. Further, the pointing device 100 of this exemplary embodiment may be implemented by any electronic device as long as it can control a screen by pointing any separated positions on the screen in response to an input from a user.

In this exemplary embodiment, the pointing device 100 may include a communication unit 110, a control unit 120, a user input unit 130 and a motion detection unit 140.

The communication unit 110 may perform communication with a pair of glasses 200 for viewing a 3D image and a display apparatus 300. The communication performed by the communication unit 110 may be any one of various forms of wired/wireless communications including infrared communication, Bluetooth communication, local area network (LAN) communication, Zigbee communication, Wi-Fi and wireless LAN communications, and others known in the art.

The communication unit 110 may be implemented in various forms depending on a reference distance between the glasses 200 for the 3D image and the pointing device 100, and a measurement distance between the glasses 200 and the pointing device 100. For example, the communication unit 110 may include a transmission element (not shown) which transmits an ultrasonic wave or a transceiving element (not shown) which transceives an ultrasonic wave. If the communication unit 110 includes the transmission element, a reception element (not shown) for receiving the ultrasonic wave may be provided at the side of the glasses 200 for viewing the 3D image.

The control unit 120 may control the communication unit 110 to perform communication with the glasses 200, detect a reference distance between the glasses 200 and the pointing device 100 and a measurement distance between the glasses 200 and the pointing device 100, and determine depth information for 3D pointing based on the reference distance and the measurement distance. The reference distance and measurement distance may be determined, for example, when a single user is both wearing the glasses 200 and holding the pointing device 100.

The reference distance is a value which is used as a reference for calculating the depth information for 3D pointing.

The reference distance may correspond to the maximum distance between the glasses 200 for the 3D image and the pointing device 100. For example, in case where a user has the pointing device 100 in his/her hand while wearing the glasses 200, the maximum distance between the glasses 200 and the pointing device 100 is a distance between the glasses 200 and the pointing device 100 under the condition where the user stretches his/her arm straight outwardly to the maximum extent possible. Therefore, the reference distance may vary depending on who uses the pointing device 100.

In general, the reference distance may correspond to the maximum depth by which the user may communicate through a pointing operation. For example, when the user has the pointing device 100 in his/her hand while wearing the glasses 200, the maximum depth by which the user may take the pointing operation may be a distance between the glasses 200 and the pointing device 100 under the condition where the user stretches his/her arm straight while leaning forward the maximum amount. Therefore, the reference distance may vary depending on who uses the pointing device 100.

In addition, the reference distance may also correspond to the user's arm length, in which case the reference distance may vary depending on who uses the pointing device 100.

The measurement distance is a distance between the glasses 200 for viewing the 3D image and the pointing device 100 when the user takes any pointing operation. Therefore, the measurement distance may vary in real time in response to the pointing operation.

The depth information for 3D pointing may be determined based on a ratio of the measurement distance to the reference distance.

The control unit 120 may detect the reference distance and the measurement distance in various ways. For example, if the communication unit 110 includes the transmission element which transmits the ultrasonic wave, the control unit 120 may detect the reference distance and the measurement distance based on a time taken for the ultrasonic wave transmitted from the transmission element to reach the glasses 200, and an ultrasonic wave speed. In addition, if the communication unit 110 includes the transceiving element which transceives the ultrasonic wave, the control unit 120 may detect the reference distance and the measurement distance based on a time taken for the ultrasonic wave transmitted from the transceiving element to reach the glasses 200 and return to the pointing device 100, and an ultrasonic wave speed.

The control unit may detect the reference distance in response to a user input received by the user input unit 130.

The control unit 120 may calculate a 3D pointing coordinate based on information detected by the motion detection unit 140 and the depth information for 3D pointing. In this case, the control unit 120 may control the communication unit 110 to transit information on the 3D pointing coordinate to the display apparatus 300.

The user input unit 130 receives the user input. The user input unit 130 may be implemented in the form of input buttons, a touch pad, etc. on the pointing device 100.

The motion detection unit 140 may detect motion of the pointing device 100. The motion detection unit 140 may be configured, for example, with a gyro sensor, a geomagnetic sensor, an angular velocity sensor or the like.

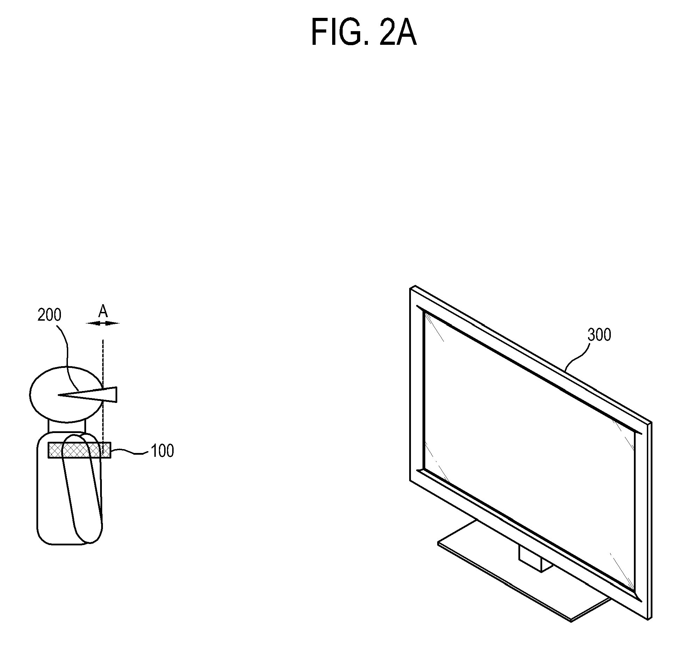

FIGS. 2A to 2D are views showing a detected measurement distance according to an exemplary embodiment.

A user may perform a 3D pointing operation under the condition where the user has the pointing device 100 in his/her hand while wearing the glasses 200 in order to control a 3D image displayed on the display apparatus 300.

As shown in FIG. 2A, the user performs the pointing operation with his/her arm folded inwardly to the maximum extent. In this case, the glasses 200 and the pointing device 100 are separated by an equal distance from the display apparatus 300. That is, the glasses 200 and the pointing device 100 are positioned at the same distance from the display apparatus 300. Accordingly, a measurement distance A between the glasses 200 and the pointing device 100 has the minimum value. More specifically, a value of the measurement distance A is 0.

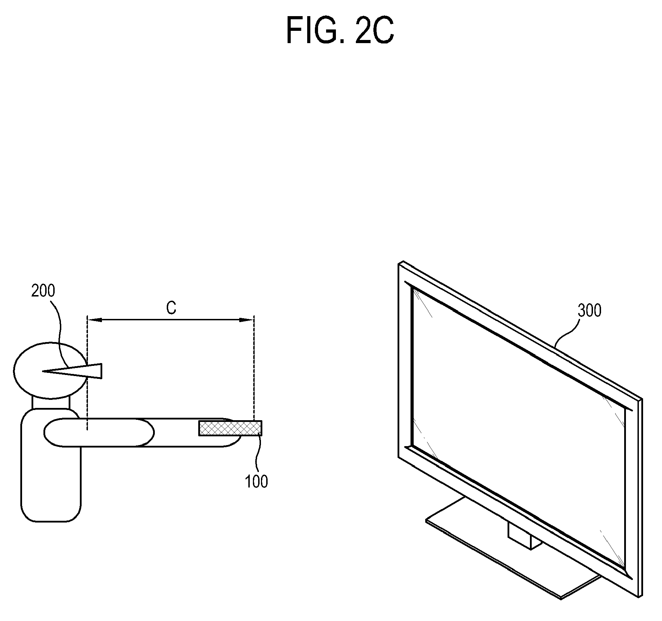

As shown in FIG. 2C, the user performs the pointing operation with his/her arm stretched straight outwardly the maximum amount possible. In this case, a measurement distance C between the glasses 200 and the pointing device 100 has the maximum value. The measurement distance C having the maximum value may be set as the reference distance between the glasses 200 and the pointing device 100.

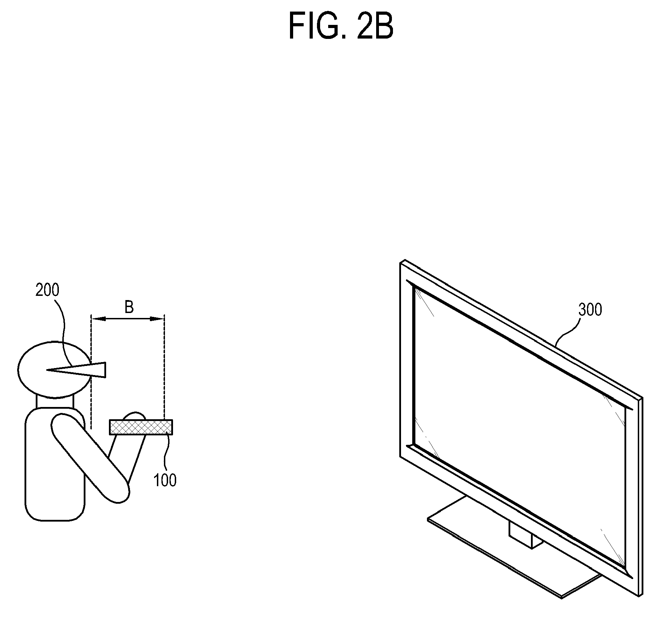

As shown in FIG. 2B, the user performs the pointing operation with his/her arm more folded than that shown in FIG. 2A and more stretched than that shown in FIG. 2A. In this case, a measurement distance B between the glasses 200 and the pointing device 100 is larger than the measurement distance A shown in FIG. 2A and smaller than the measurement distance C shown in FIG. 2C.

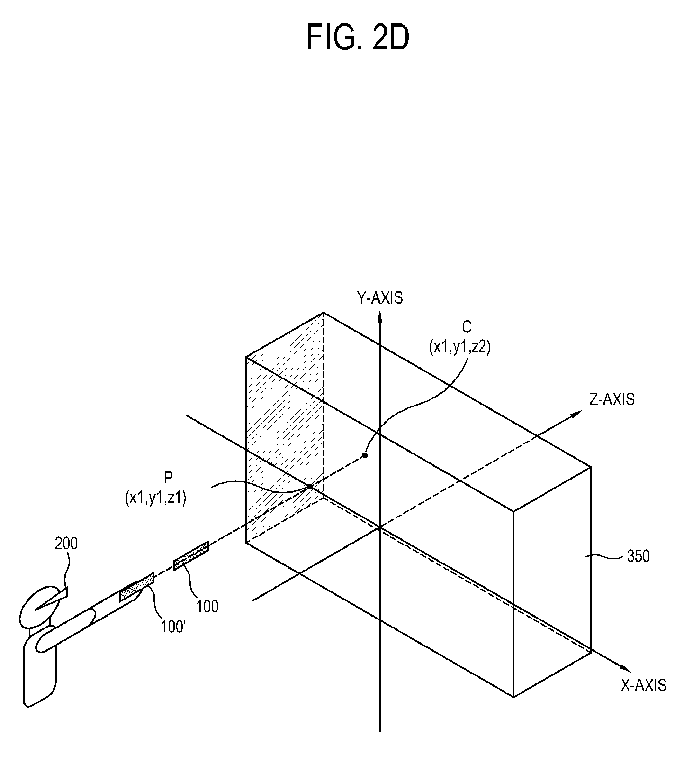

As shown in FIG. 2D, a 3D image 350 has a depth. For example, a spot P (X1, Y1, Z1) and a spot C (X1, Y1, Z2) have a different Z coordinate although they have the same X and Y coordinates. In this case, the 3D image 350 has the depth that is larger in the spot C (X1, Y1, Z2) than in the spot P (X1, Y1, Z1). In order to point a deeper spot in the 3D image 350, the user may stretch his/her arm less when the user points to the spot P (X1, Y1, Z1) by means of the previous pointing device 100' than when the user points to the spot C (X1, Y1, Z2) by means of the current pointing device 100. That is, by stretching his/her arm from the position of pointing device 100' to the position of pointing device 100, the user may move the pointing operation on the display apparatus 300 from spot P to spot C.

3D spatial coordinates at a pointing spot are required for 3D pointing. That is, depth information corresponding to a z coordinate as well as X and Y coordinates is required.

The X and Y coordinates may be obtained through an operation recognition sensor such as a gyro sensor or the like. For example, the X and Y coordinates at a pointing spot may be obtained by measuring the point spot and a degree of inclination from the pointing spot through the gyro sensor.

The depth information may be obtained based on the measurement distance and the reference distance between the glasses 200 for the 3D image and the pointing device 100. In this case, the distance between the glasses 200 and the pointing device 100 may be measured in various ways. For example, the distance between the glasses 200 and the pointing device 100 may be measured using an ultrasonic sensor. Such use of the ultrasonic sensor may be most adaptable for low electric power and inexpensive portable devices. In addition, the ultrasonic sensor may be replaced by laser, infrared ray or the like.

The ultrasonic sensor may be used in various ways including setting a transmission element for the glasses 200 and a reception element for the pointing device 100, using both of the transmission element and the reception element. Accordingly, although this exemplary embodiment assumes that the transmission element is equipped in the glasses 200 and the reception element is equipped in the pointing device 100, the present inventive concept is not limited thereto.

The transmission element included in the glasses 200 for viewing the 3D image generates an ultrasonic wave at regular intervals and transmits it to the pointing device 100, and the reception element included in the pointing device 100 receives the ultrasonic wave transmitted from the glasses 200. In this case, the pointing device 100 may calculate the distance between the glasses 200 and the pointing device 100 based on ultrasonic wave arrival time and an ultrasonic wave speed (340m/s).

More specifically, the maximum distance may be obtained between the glasses 200 and the pointing device 100 when the user stretches his/her arm the maximum amount to push a touch button, and may be set as the reference distance.

In addition, a real time distance may be obtained between the glasses 200 and the pointing device 100 when the user takes any pointing operation, and may be set as the measurement distance.

With the reference distance and the measurement distance known, the depth information for 3D pointing may be obtained according to the following equation.

### Depth for 3D pointing = Measurement distance/Reference distance... (1)

The reference distance is a fixed constant for the same user although it may vary depending on who uses the pointing device 100, i.e., it may be based on the characteristics of the particular user. Accordingly, in FIG. 2A, since the measurement distance A has the minimum value, the depth for 3D pointing becomes minimal. In FIG. 2C, since the measurement distance C has the maximum value, the depth for 3D pointing becomes maximal.

In addition, the depth for 3D pointing is proportional to the measurement distance. Accordingly, in FIG. 2D, since the measurement distance calculated when the spot P (X1, Y1, Z1) is pointed to is smaller than the measurement distance calculated when the spot C (X1, Y1, Z2) is pointed to, the depth of the spot P (X1, Y1, Z1) is smaller than the depth of the spot C (X1, Y1, Z2).

In this case, the obtained X and Y coordinates and depth information (i.e., Z coordinate) for 3D pointing are transmitted to the display apparatus 300 which displays and controls based on the 3D pointing.

In this manner, in this exemplary embodiment, the 3D pointing is finally achieved at a display stage. Further, in this exemplary embodiment, after the user stretches his/her arm outwardly the maximum extent while having the pointing device in his/her hand, and pushes an input button to complete a setting, the depth information for the user can be easily obtained. Accordingly, when the user uses the pointing device 100 to perform the 3D pointing on a 3D image having a depth, the user can use obtained the depth information more easily and conveniently.

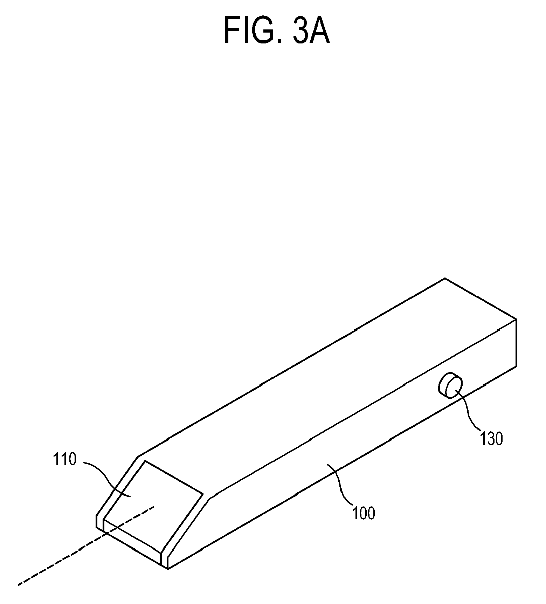

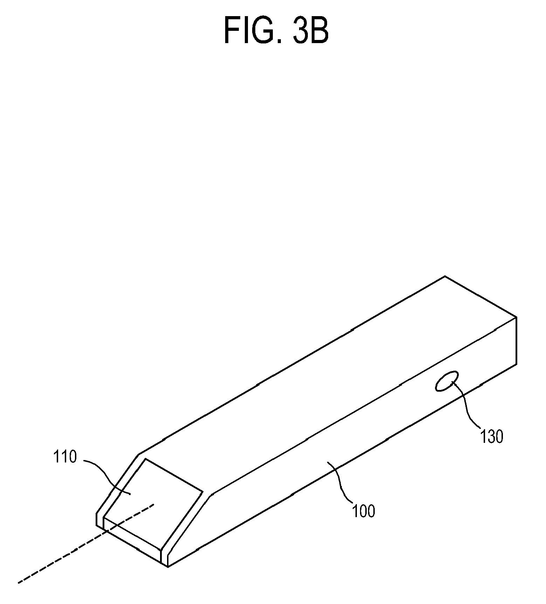

FIGS. 3A and 3B are perspective views of a pointing device 100 according to an exemplary embodiment.

As shown in FIG. 3A, the user input unit 130 is implemented in the form of input button on the pointing device 100. As shown in FIG. 3B, the user input unit 130 is implemented in the form of touch button on the pointing device 100. In these cases, when the user pushes the input button or touches the touch button and then stretches his/her arm straight outwardly to the maximum extent, the pointing device 100 may measure the reference distance between the glasses 200 and the pointing device 100.

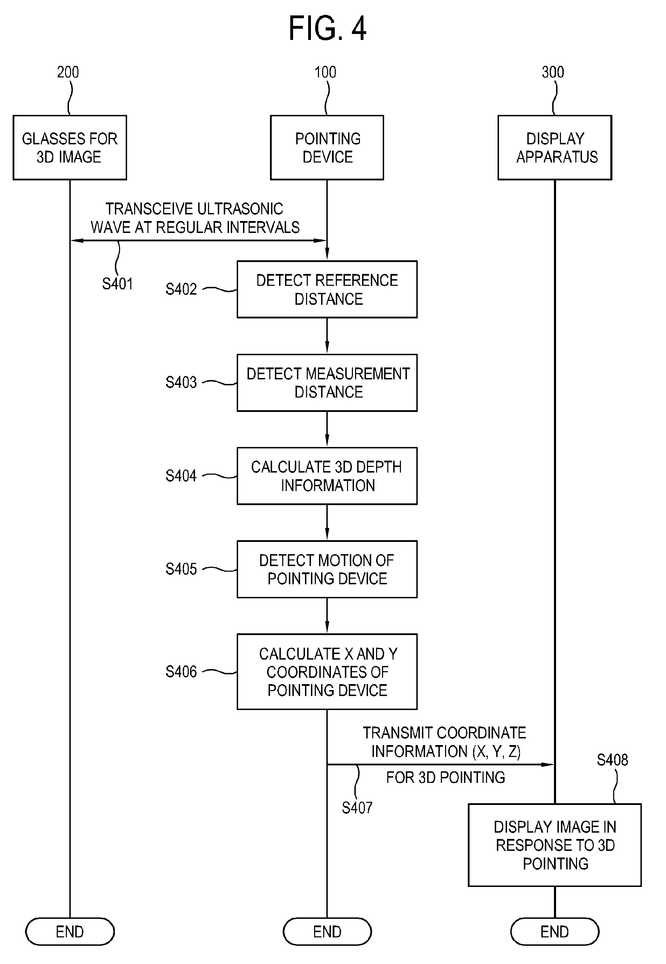

FIG. 4 is a view showing control operation between a pointing device, glasses for 3D image and a display apparatus according to an exemplary embodiment.

The glasses 200 and the pointing device 100 exchange an ultrasonic wave with each other at regular intervals (S401). For example, the glasses 200 may transmit the ultrasonic wave to the pointing device 100 at regular intervals, and the pointing device 100 may sense or receive the ultrasonic wave transmitted from the glasses 200.

The pointing device 100 detects the reference distance (S402). For example, the pointing device 100 may detect the distance between the glasses 200 and the pointing device 100 under the condition where the user stretches his/her arm to the maximum extent, that is, the maximum distance.

The pointing device 100 detects the measurement distance between the glasses 200 and the pointing device 100 (S403). The measurement distance may be measured in real time in response to the pointing operation by the user.

The pointing device 100 calculates 3D depth information based on a ratio of the measurement distance to the reference distance (S404). The 3D depth information may be calculated according to the above-described equation (1).

The pointing device 100 detects motion of the pointing device 100 (S405). In this case, the pointing device 100 calculates X and Y coordinate information based on the detected motion of the pointing device 100 (S406).

The pointing device 100 transmits the coordinate information (X, Y, Z) for 3D pointing to the display apparatus 300 (S407).

The display apparatus 300 displays and controls an image in response to the 3D pointing (S408).

According to a modification of this exemplary embodiment, instead of equipping the transmission element and the like in the glasses 200 for viewing the 3D image, the reference distance and the measurement distance may be detected using a separate distance measuring device. For example, when the user wears the distance measuring device, the reference distance and the measurement distance may be measured by communication between the distance measuring device and the pointing device 100.

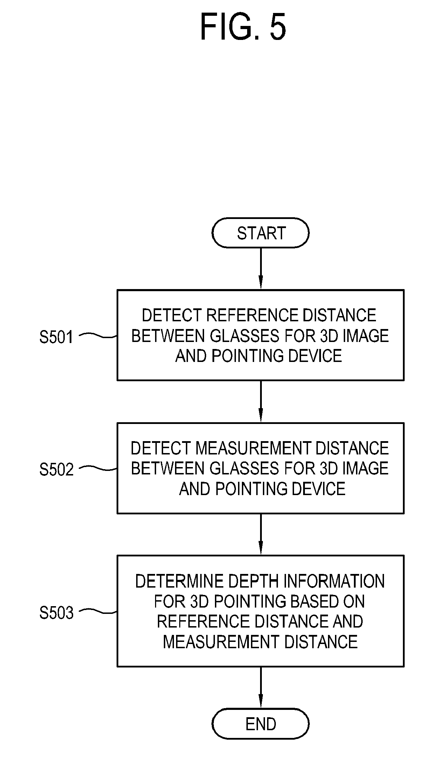

FIG. 5 is a view showing a control procedure of the pointing device according to an exemplary embodiment.

The pointing device 100 performs communication with the glasses 200 and detects the reference distance between the glasses 200 and the pointing device 100 (S501). The reference distance may correspond to the maximum distance between the glasses 200 and the pointing device 100.

Further, the pointing device 100 may also detect the reference distance in response to an input from a user. For example, when the user pushes the input button or touches the touch button and then stretches his/her arm straight to the maximum extent, the pointing device 100 may measure the reference distance.

The pointing device 100 performs communication with the glasses 200 and detects the measurement distance between the glasses 200 and the pointing device 100 (S502). The measurement distance may be the distance between the glasses 200 and the pointing device 100 when the user takes any pointing operation.

The pointing device 100 determines the depth information for 3D pointing based on the reference distance and the measurement distance (S503). The depth information for 3D pointing may be determined based on a ratio of the measurement distance to the reference distance.

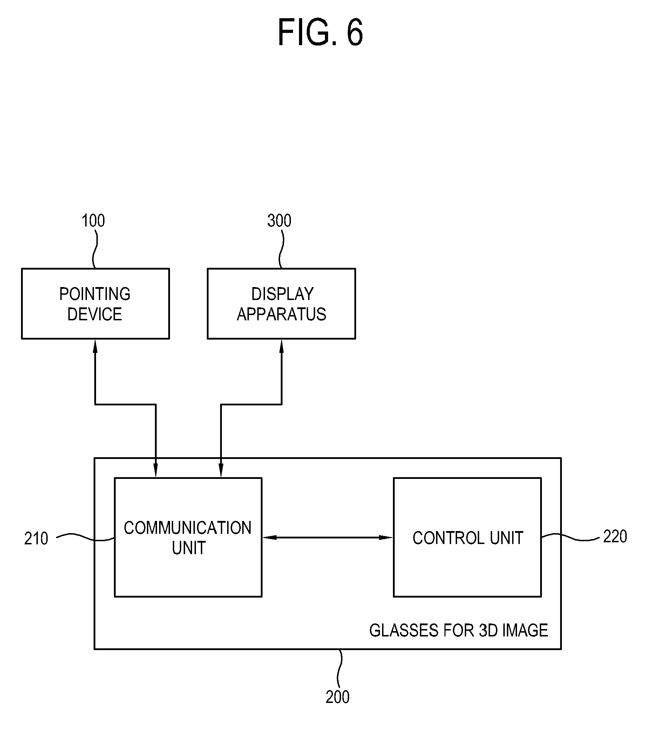

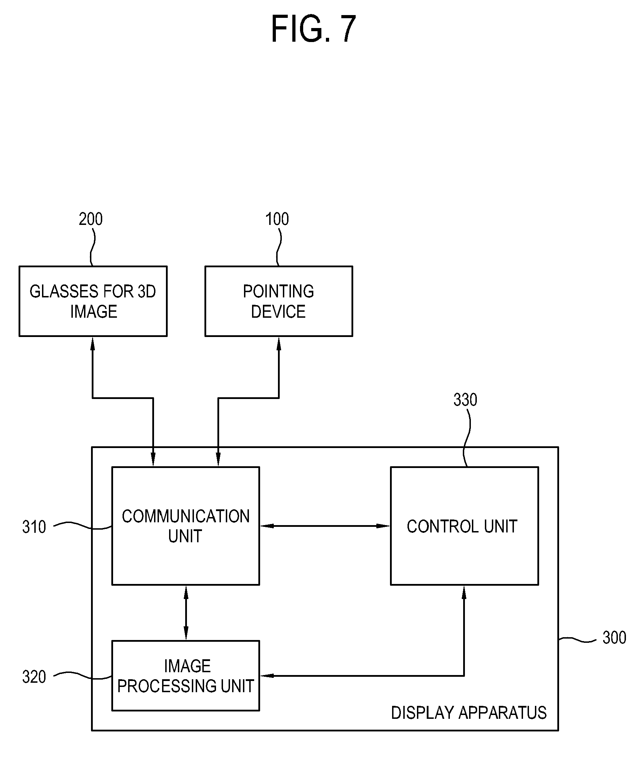

FIGS. 1 to 5 have shown and described execution of an algorithm to determine the depth information for 3D pointing by means of the pointing device 100. However, the present inventive concept is not limited thereto, but the algorithm to determine the depth information may be executed by the glasses 200 or the display apparatus 300, which will be described below with reference to FIGS. 6 and 7.

FIG. 6 is a block diagram showing a configuration of glasses for viewing the 3D image according to an exemplary embodiment.

The glasses 200 according to an exemplary embodiment may be of a shutter type or a polarization type. The glasses 20 of the shutter type are driven in a manner to selectively open/close a left eye shutter and a right eye shutter, respectively. In this case, the glasses 200 are operated in synchronization with a 3D image displayed on the display apparatus 300. More specifically, when a right eye image is displayed on the display apparatus 300, the glasses 200 open the right eye shutter and close the left eye shutter, and when a left eye image is displayed on the display apparatus 300, the glasses 200 close the right eye shutter and open the left eye shutter. The glasses 200 for viewing the 3D image of the polarization type have different polarization plates attached to sides of both left and right glasses lens, respectively. In this case, the left eye image and the right eye image of the 3D image have different polarization, which shows separated left eye and right eye images to a user when the user wears the glasses 200 of the polarization type. This allows the user to observe the 3D image.

In this exemplary embodiment, the glasses 200 for viewing the 3D image may include a communication unit 210 and a control unit 220.

The communication unit 210 may perform communication with the pointing device 100 and the display apparatus 300. The communication performed by the communication unit 210 may be any one of various forms of wired/wireless communications including infrared communication, Bluetooth communication, LAN communication, Zigbee communication, Wi-Fi and wireless LAN communications, and others known in the art.

The control unit 220 may control the communication unit 210 to perform communication with the pointing device 100, detect a reference distance between the glasses 200 and the pointing device 100 and a measurement distance between the glasses 200 and the pointing device 100, and determine depth information for 3D pointing based on the reference distance and the measurement distance.

In this case, the control unit 220 may control the communication unit 210 to transmit the determined depth information for 3D pointing to the pointing device 100 or the display apparatus 300.

FIG. 7 is a block diagram showing a configuration of the display apparatus according to an exemplary embodiment.

The display apparatus 300 according to an exemplary embodiment may be a digital TV, a desktop computer, a laptop computer, a set-top box, a monitor or others known in the art. Further, the display apparatus 300 of this exemplary embodiment may be implemented by any electronic device as long as it can display a 3D image and can be controlled by the pointing device 100.

In this exemplary embodiment, the display apparatus 300 may include a communication unit 310, an image processing unit 320 and a control unit 330.

The communication unit 310 may perform communication with the pointing device 100 and the glasses 200 for viewing the 3D image. The communication performed by the communication unit 310 may be any one of various forms of wired/wireless communications including infrared communication, Bluetooth communication, LAN communication, Zigbee communication, Wi-Fi and wireless LAN communications, and others known in the art.

The image processing unit 320 may process and display a 3D image. Specifically, the image processing unit 320 may alternately display a left eye image and a right eye image.

The image processing unit 320 may display and control an image in response to 3D pointing performed by the pointing device 100.

In addition, the image processing unit 320 may perform at least one of decoding, scaling, brightness adjustment, contrast adjustment, shading adjustment and image enhancement.

The control unit 330 may control the communication unit 310 to receive the reference distance between the glasses 200 and the pointing device 100 and the measurement distance between the glasses 200 and the pointing device 100 from at least one of the pointing device 100 and the glasses 200, and determine depth information for 3D pointing based on the received reference distance and measurement distance.

Although a few preferred embodiments have been shown and described, it will be appreciated by those skilled in the art that various changes and modifications might be made without departing from the scope of the invention, as defined in the appended claims.

## Claims

1. A pointing device comprising:
a communication unit which performs communication with glasses for viewing a three-dimensional (3D) image and a display apparatus; and
a control unit which controls the communication unit to perform communication with the glasses, detects a reference distance between the glasses and the pointing device, detects a measurement distance between the glasses and the pointing device, and determines depth information for 3D pointing based on the reference distance and the measurement distance.

2. The pointing device according to claim 1, wherein the reference distance corresponds to a maximum distance between the glasses and the pointing device.

3. The pointing device according to claim 1, further comprising a user input unit which receives an input from a user,
wherein the control unit detects the reference distance in response to the input from the user.

4. The pointing device according to claim 1, wherein the depth information for the 3D pointing is determined based on a ratio of the measurement distance to the reference distance.

5. The pointing device according to claim 1, wherein the communication unit comprises a transmission element which transmits an ultrasonic wave, and
wherein the control unit detects the reference distance and the measurement distance based on an amount of time for the ultrasonic wave transmitted from the transmission element to reach the glasses and on an ultrasonic wave speed.

6. The pointing device according to claim 1, wherein the communication unit comprises a transceiving element which transceives an ultrasonic wave, and
wherein the control unit detects the reference distance and the measurement distance based on an amount of time for the ultrasonic wave transmitted from the transceiving element to reach the glasses for 3D image and return to the pointing device and on an ultrasonic wave speed.

7. The pointing device according to claim 1, further comprising a motion detection unit which detects motion of the pointing device,
wherein the control unit calculates coordinates for the 3D pointing based on information detected by the motion detection unit and the depth information for the 3D pointing.

8. A method of controlling a pointing device for use with a three-dimensional (3D) display apparatus, the method comprising:
determining a reference distance;
detecting a measurement distance between a pair of glasses and the pointing device; and
determining depth information of 3D pointing on the display apparatus based on the reference distance and the measurement distance.

9. The method according to claim 8, wherein the reference distance corresponds to a maximum distance between the glasses and the pointing device.

10. The method according to claim 8, further comprising receiving an input from a user,
wherein the reference distance is detected in response to the input from the user.

11. The method according to claim 8, wherein the depth information for the 3D pointing is determined based on a ratio of the measurement distance to the reference distance.

12. The method according to claim 8, wherein the pointing device comprises a transmission element which transmits an ultrasonic wave, and
wherein the reference distance and the measurement distance are detected based on an amount of time for the ultrasonic wave transmitted from the transmission element to reach the glasses and on an ultrasonic wave speed.

13. The method according to claim 8, wherein the pointing device comprises a transceiving element which transceives an ultrasonic wave, and
wherein the reference distance and the measurement distance are detected based on an amount of time for the ultrasonic wave transmitted from the transceiving element to reach the glasses and return to the pointing device and on an ultrasonic wave speed.

14. The method according to claim 8, wherein the pointing device further comprises a motion detection unit which detects motion of the pointing device, and
wherein coordinates for the 3D pointing are calculated based on information detected by the motion detection unit and the depth information for the 3D pointing.

15. The method according to claim 14, wherein information on the coordinates for the 3D pointing is transmitted to a display apparatus.
